# EUROPÄISCHE PATENTSCHRIFT

(11) **EP 1 256 743 B1**
(45) Veröffentlichungstag und Bekanntmachung des Hinweises auf die Patenterteilung: **17.12.2003**
(21) Anmeldenummer: 02008775.5
(22) Anmeldetag: 19.04.2002
(51) Int. Cl.: F16H 3/089, F16H 61/04

(54) **Schaltgetriebe für ein Motorrad**
Transmission for a motorcycle
Transmission pour motocyclettes

(30) Priorität: 09.05.2001 DE 10122450
(43) Veröffentlichungstag der Anmeldung: 13.11.2002
(73) Patentinhaber: Bayerische Motoren Werke Aktiengesellschaft, 80809 München (DE)
(72) Erfinder: Nehse, Wolfgang, 86934 Reichling (DE)

(56) Entgegenhaltungen:
- EP-A- 0 445 828
- DE-A- 3 421 582
- DE-A- 3 446 430
- DE-A- 19 915 200
- DE-C- 931 150
- US-A- 4 817 470

## Beschreibung

Die Erfindung betrifft ein Schaltgetriebe für ein Motorrad nach dem Oberbegriff des Hauptanspruchs.

Die DE 1 450 694 beschreibt eine Schaltvorrichtung für ein Zahnräderwechselgetriebe für Kraftfahrzeuge, mit mehreren schaltbaren Zahnradsätzen, von denen jeweils ein Zahnrad als Festrad und das andere Zahnrad als Losrad auf einer Getriebewelle gehalten ist, wobei jeweils ein Losrad zur Drehmomentübertragung mit der zugehörigen Getriebewelle verbunden werden kann. Die Verbindung von Losrad und zugehöriger Getriebewelle wird nach Erreichen des Gleichlaufs von Getriebewelle und Losrad durch Festlegung des Losrades auf der Getriebewelle bewirkt. Eine elektronische Steuereinrichtung detektiert die Drehzahlen, ermittelt den Synchronlaufzeitpunkt und löst daraufhin eine Schaltsperre, die die Betätigung des Schaltglieds freigibt.

Bei der vorgenannten Schaltvorrichtung ist die Schaltqualität dadurch beeinträchtigt, dass der Schaltvorgang sehr viel Zeit beansprucht. Er muss über die Steuereinrichtung genau abgestimmt werden. Die Zeitdauer bis zum Erreichen der Synchrondrehzahl schränkt die möglichen Optimierungen, mehr Schaltkomfort zu erreichen, ein. Wird auf eine elektronische Steuereinrichtung verzichtet, entstehen bei Klauengetrieben beim Schaltvorgang Unregelmäßigkeiten dadurch, dass entweder Klaue in Tasche oder Klaue auf Steg treffen kann. Die Maßnahmen zur Reduzierung der Häufigkeit des letzten Falles sind kleine Stege und große Taschen. Dadurch entsteht ein ungünstig großes Lastwechselspiel, außerdem ist der Fall Klaue auf Steg nach wie vor möglich. Dieser Schaltzustand führt zu einem deutlichen Schaltgeräusch, bis hin zu der Gefahr von Gangspringern.

US-A-4 817 470 offenbart ein Schaltgetriebe gemäß dem Oberbegriff des Anspuches 1.

Es ist Aufgabe der Erfindung, ein unsynchronisiertes Schaltgetriebe für ein Motorrad bereitzustellen, bei dem ein zügiger Wechsel der Übersetzungsstufen möglich ist und das trotz einfach aufgebauter Steuereinrichtung einen Schaltvorgang ermöglicht, der als komfortabel empfunden wird.

Die Aufgabe wird erfindungsgemäß mit den kennzeichnenden Merkmalen des Anspruchs 1 gelöst. Weitere Ausgestaltungen der Erfindung ergeben sich aus dem Unteranspruch.

Nach der Erfindung ist ein Schaltgetriebe für ein Motorrad, zur Drehmoment- und Drehzahlanpassung zwischen einem Antriebsmotor und einem Hinterrad des Motorrads, mit mindestens zwei Getriebewellen mit mehreren Zahnradsätzen unterschiedlicher Untersetzung, von denen jeweils ein Zahnrad als Festrad und das andere Zahnrad als Losrad auf der zugehörigen Getriebewelle gehalten ist und wobei jeweils das Losrad zur Drehmomentübertragung mit der zugehörigen Getriebewelle über eine unsynchronisierte schaltbare Klauenkupplung verbunden werden kann, dadurch gekennzeichnet, dass eine Steuereinrichtung, mindestens bestehend aus einem Prozessor und je einem Drehzahlsensor an den Getriebewellen, die Position von Klauen zu Taschen der schaltbaren Klauenkupplungen aus der Position der Getriebewellen zueinander, unter Berücksichtigung der Untersetzungsverhältnisse der einzelnen Gangstufen, berechnet und einen Zeitpunkt einer Einrückfreigabe bestimmt, der noch vor Erreichen der Synchrondrehzahl der beiden Getriebewellen liegt.

Das hat den Vorteil, dass der Schaltvorgang beschleunigt wird. Dadurch wird auch der Schaltkomfort erhöht, das Schaltsystem bietet ein großes Potential für die Optimierung des Schaltablaufs bezüglich gleichmäßiger Schaltzeit, verminderter Geräuschabstrahlung, geringerem Verschleiß und verringertem Antriebsstrangspiel. Außerdem sind Gangspringer nicht mehr möglich.

Bei einer vorteilhaften Ausführungsform der Erfindung misst jeweils ein Drehzahlsensor die Drehzahl jeweils eines Festrades einer Getriebewelle. Das ergibt einen besonders einfachen Aufbau des Schaltgetriebes.

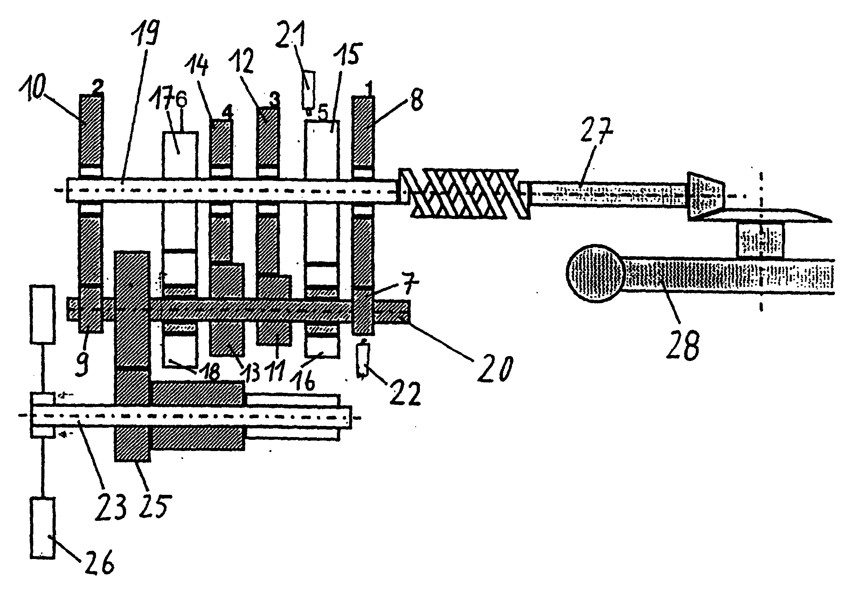

Ein bevorzugtes Ausführungsbeispiel der Erfindung ist in der nachfolgenden Beschreibung mit der zugehörigen Zeichnung dargestellt. Die einzige Figur zeigt eine schematische Prinzipdarstellung eines Schaltgetriebes gemäß der Erfindung mit sechs Schaltstufen.

Bei einem Klauenschaltgetriebe mit drei Getriebewellen 19,20,23, einer Eingangswelle 23, einer Vorgelegewelle 20 und einer Ausgangswelle 19, und mit sechs Schaltstufen, wird jeweils einer von sechs Zahnradsätzen 1,2,3,4,5,6 durch eine nicht gezeichnete, nach dem Stand der Technik übliche Schalteinrichtung in den Kraftfluss geschaltet. Dazu wird das jeweilige Losrad 8,10,12,14,16,18 der jeweils drehmomentübertragenden Schaltstufe mit der Vorgelegewelle 20 oder der Ausgangswelle 19 verbunden. Die Vorgelegewelle 20 wird von der Eingangswelle 23 über einen nicht schaltbaren Zahnradsatz 25 angetrieben. Das jeweilige in den Kraftfluss geschaltete Losrad 8,10,12,14,16,18 überträgt das Drehmoment an das jeweils zum Zahnradsatz gehörige Festrad 7,9,11,13,15,17 auf der Ausgangswelle 19 oder umgekehrt.

Die Drehmomentübertragung zur Eingangswelle 23 erfolgt vom nicht gezeichneten Antriebsmotor über eine schaltbare Reibkupplung 26 und von der und Ausgangswelle 19 über eine Gelenkwelle 27 zum Hinterrad 28.

Die jeweilige Drehzahl der Festräder 7,15 der Zahnradsätze 1 und 5 und damit die der Vorgelege- 20 und Ausgangswelle 19, wird mit Drehzahlsensoren 21,22 über nicht gezeichnete Bezugsmarken gemessen. Dadurch lassen sich bei vorgegebener Montage sämtliche Positionen von Klauen und Taschen der nicht gezeichneten Klauenkupplungen der Losräder 8,10,12,14,16,18 bestimmen. Da alle Schiebestücke entweder direkt mit einer der Getriebewellen 19,20 drehfest verbunden sind oder aber über ein festes Übersetzungsverhältnis mit einer Getriebewelle 19,20 laufen, lassen sich auch im Betrieb die Positionen von Klauen und Taschen durch einen nicht gezeichneten Prozessor berechnen. Da die Positionen von Klauen und Taschen gleichmäßig am Umfang verteilt sind, sind bei Kenntnis einer Position von Klaue und Tasche für diese Schaltstufe auch die anderen Varianten beschrieben. Bei automatisierten oder teilautomatisierten Systemen lässt sich jetzt der Schaltvorgang durch den Prozessor zeitlich so festlegen, dass in jedem Fall die Klaue in die Tasche trifft.

Bei willkürlicher Montage der Schaltgetriebes wäre auch ein adaptives Erlernen der Taschenpositionen möglich, da bei anhaltendem Schub- oder Zugbetrieb eine Winkellage bestimmt werden kann.

## Patentansprüche

1. Schaltgetriebe für ein Motorrad, zur Drehmoment- und Drehzahlanpassung zwischen einem Antriebsmotor und einem Hinterrad des Motorrads, mit mindestens zwei Getriebewellen (19,20) mit mehreren Zahnradsätzen (1,2,3,4,5,6) unterschiedlicher Untersetzung, von denen jeweils ein Zahnrad als Festrad (7,9,11,13,15,17) und das andere Zahnrad als Losrad (8,10,12,14,16,18) auf der zugehörigen Getriebewelle (19,20) gehalten ist und wobei jeweils das Losrad (8,10,12,14,16,18) zur Drehmomentübertragung mit der zugehörigen Getriebewelle (19,20) über eine unsynchronisierte schaltbare Klauenkupplung verbunden werden kann, **dadurch gekennzeichnet, dass** eine Steuereinrichtung, mindestens bestehend aus einem Prozessor und je einem Drehzahlsensor (21,22) an den Getriebewellen (19,20), die Position von Klauen zu Taschen der schaltbaren Klauenkupplungen aus der Position der Getriebewellen (19,20) zueinander, unter Berücksichtigung der Untersetzungsverhältnisse der einzelnen Gangstufen, berechnet und einen Zeitpunkt einer Einrückfreigabe bestimmt, der noch vor Erreichen der Synchrondrehzahl der beiden Getriebewellen (19,20) liegt.

2. Schaltgetriebe nach Anspruch 1, **dadurch gekennzeichnet, dass** jeweils ein Drehzahlsensor (21,22) die Drehzahl jeweils eines Festrades (7,15) einer Getriebewelle (19,20) misst.

## Claims

1. A gear-shift mechanism for a motorcycle for matching the torque and speed between an engine and a rear wheel of the motorcycle, comprising at least two gear shafts (19, 20) with a number of sets of gearwheels (1, 2, 3, 4, 5, 6) differing in transmission ratios, in each of which a respective gearwheel (7, 9, 11, 13, 15, 17) is fixed and the other gearwheel (8, 10, 12, 14, 16, 18) is loose on the associated gear shaft (19, 20) and wherein each loose wheel (8, 10, 12, 14, 16, 18) can be connected for torque transmission to the associated gear shaft (19, 20) via an unsynchronised shiftable claw clutch, **characterised in that** a control device comprising at least of a processor and respective speed sensors (21, 22) on the gear shafts (19, 20) calculates the position of claws relative to pockets on the claw clutches from the position of the gear shafts (19, 20) relative to one another, allowing for the transmission ratios of the individual gears, and determines a time for releasing the engagement before the speed of the two gear shafts (19, 20) has been synchronised.

2. A gear-shift mechanism according to claim 1, **characterised in that** a respective speed sensor (21, 22) measures the speed of each fixed wheel (7, 15) on a gear shaft (19, 20).

## Revendications

1. Transmission pour une motocyclette pour l'adaptation du couple et du nombre de tours entre un moteur d'entraînement et une roue arrière de la motocyclette, comportant au moins deux arbres de transmission (19, 20) avec plusieurs ensembles d'engrenages (1, 2, 3, 4, 5, 6) de démultiplication différente, dont respectivement une roue d'engrenage est maintenue en tant que roue fixe (7, 9, 11, 13, 15, 17) et l'autre roue d'engrenage en tant que roue libre (8, 10, 12, 14, 16, 18) sur l'arbre de transmission associé (19, 20) et dans laquelle respectivement la roue libre (8, 10, 12, 14, 16, 18) peut être reliée, pour la transmission du couple, avec l'arbre de transmission associé (19, 20), par l'intermédiaire d'un couplage à griffes non synchronisé, embrayable,
**caractérisée en ce qu'**
un dispositif de commande, composé au moins d'un microprocesseur et de respectivement un capteur de nombre de tours (21, 22) sur les arbres de transmission (19, 20), calcule la position des griffes par rapport aux creux des couplages à griffes embrayables à partir de la position des arbres de transmission ( 19, 20) l'un par rapport à l'autre, en tenant compte des rapports de démultiplication des divers étages, et détermine un instant d'un relâchement de l'embrayage qui se situe encore avant l'obtention du nombre de tours synchrone des deux arbres de transmission (19, 20).

2. Transmission selon la revendication 1,
**caractérisée en ce qu'**
un capteur de nombre de tours (21,22) mesure respectivement le nombre de tours d'une roue fixe (7, 15) respectivement d'un arbre de transmission (19, 20).
